# EUROPEAN PATENT SPECIFICATION

(11) **EP 2 086 456 B1**
(45) Date of publication and mention of the grant of the patent: **18.04.2018**
(21) Application number: 07848166.0
(22) Date of filing: 22.11.2007
(51) Int. Cl.: A61C 17/06, A61C 19/00, A61L 2/18, A61C 1/00

(54) **CLEANSING OF SUCTION LINE OF DENTAL CARE UNIT**
REINIGUNG DER SAUGLEITUNG EINES ZAHNPFLEGEGERÄTS
NETTOYAGE D'UNE CONDUITE D'ASPIRATION D'UNITÉ DE SOIN DENTAIRE

(30) Priority: 22.11.2006 FI 20061028
(43) Date of publication of application: 12.08.2009
(73) Proprietor: PLANMECA OY, 00880 Helsinki (FI)
(72) Inventor: SALONEN, Tommi, 01600 Vantaa (FI)
(86) International application number: PCT/FI2007/050633
(87) International publication number: WO 2008/062104

(56) References cited:
- WO-A1-90/01909
- WO-A1-91/03214
- DE-A1- 3 805 609
- DE-A1- 3 900 108
- DE-A1- 3 900 108
- JP-A- 03 170 151
- JP-A- 09 182 761
- JP-A- H09 182 761
- US-A- 5 201 654
- US-A1- 2002 134 797

## Description

### FIELD OF THE INVENTION

The present invention relates to cleansing of the suction line of a dental care apparatus, and to cleansing of a suction line implemented as physically separate from a dental care apparatus but arranged to be used in connection with the dental care apparatus. Such a suction line typically comprises means for producing a negative pressure and at least one suction hose arranged to be attached or attachable by its first end to a dental care unit or to an assistant's unit arranged in connection with it or, more generally speaking, to a suction line connection separate from the dental care apparatus but arranged in connection with a dental care work post, and by its other end to at least one hose holder provided in the dental care apparatus or in a device or stand arranged to be used in connection with it, or to a functionally corresponding holder, such as a holder for a suction head or other means attachable to the suction hose for use in connection with dental care operations.

### BACKGROUND OF THE INVENTION

A dental care unit is a device used in connection with dental care work, an essential and traditional function of which is to furnish the dental care instruments used by the dentist with the physical quantities required for their operation, such as operating power (e.g. electricity or compressed air) and/or water. On the other hand, dental care work also involves the use of means for removing blood, saliva, tartar pieces etc. from the patient's mouth by suction. Thus, in addition to the typical electric, pneumatic and/or water lines, such a dental care unit also has a negative pressure line in the machine itself or substantially in connection with it.

Manufacturers of dental care units have for quite a time been obliged to get used to hygienic requirements becoming continuously stricter. As the negative pressure line arranged in connection with the dental care work post is used to suck blood, saliva, food remnants etc. from patients' mouths, it is clear that the walls of the lines easily become an excellent substrate for the growth of various microbes, which may result in the transmission of disease-causing microbes from an infected patient to a later patient.
The efforts to keep the suction lines clean include arrangements for flushing them with various aerosols, typically cleansing agent-air aerosols. Published US application 2002/0134797 describes one arrangement for use in connection with a flushing arrangement for the supply of cleansing agent. However, flushing does not necessarily result in a sufficiently long-lasting disinfecting effect especially in respect of elimination of microbes. Extension of this effective period is an objective at least in the solution according to DE patent specification 4 101 615, wherein a cleansing agent in solid particle-like state is sucked through the lines with the idea that the particles should adhere to and the effective agent be dissolved on the wet walls of the suction lines. It is hard to picture, though, that this solution could provide an arrangement whereby the suction line walls are comprehensively covered by the effect of the treating agent - alone for the reason that when suction is on, the line walls do not remain wet but for a short time, and thus the whole basic starting point of the functional idea of the solution is no longer valid. Due to the problems associated with the prior art solutions, the practical solution often resorted to is, among other, detaching the suction hoses of the suction line from the dental care unit and wash them separately. Disinfecting a suction hose in place is discussed in DE 39 00 108.

### BRIEF DESCRIPTION OF THE INVENTION

The object of the invention is achieved with the features of independent claims 1, 5 and 11 and is to create an arrangement that will enable the suction lines to be treated with a liquid cleansing agent in a way that makes it possible to achieve a longer effective period and a longer-lasting effect of the cleansing agent than before so that its effect is applied to the suction line walls overall or at least in a desired part of the suction line. According to the invention, this is implemented by feeding a substantially liquid cleansing agent into the suction line in such manner that, instead of flushing, at least a given desired part of the suction line is completely filled with cleansing agent and the agent is allowed to remain standing in this part of the line for a desired period of time. As for the suction line itself and the arrangements associated with it, this requires introduction of new design criteria to take into account for the arrangement to tolerate the line to be filled with liquid at least in the aforesaid given part, without leaking, for the entire desired effective period. It is further necessary to take care that the system will also be able to remove the liquid left standing in the line and possibly in the components comprised in it.

### BRIEF DESCRIPTION OF THE FIGURES

In the following, the invention, its preferred embodiments and the advantages afforded by them will be described in greater detail by referring to the attached drawings, wherein
Fig. 1 represents a first embodiment of the arrangement of the invention,
Fig. 2 represents a second embodiment of the arrangement of the invention,
Fig. 3 represents a third embodiment of the arrangement of the invention, and
Fig. 4 visualizes a suction line cleansing station arranged in connection with a dental treatment work post.

### DETAILED DESCRIPTION OF THE INVENTION

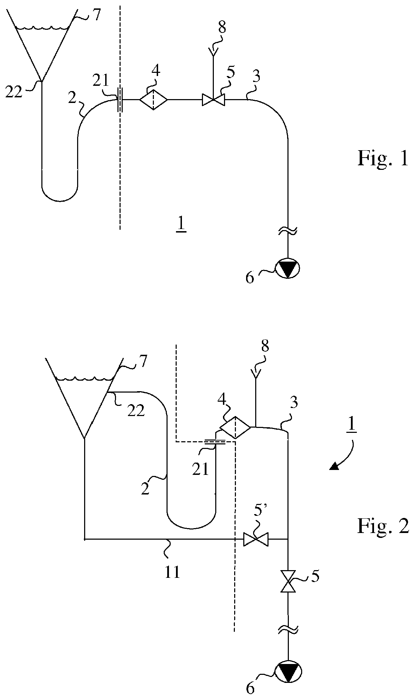

In the arrangement according to Fig. 1, the suction line 1 comprises at least one suction hose 2 comprising a first end 21 and a second end 22, and a part 3 of the suction line 1 located in the dental care unit or equivalent and remaining invisible from the dental treatment work post. The suction hose or hoses 2 are typically arranged to be detachably connected by their aforesaid first end 21 to the dental care unit, or to a device or stand (not shown in the figure) designed to be used in connection with the dental care unit. The arrangement additionally comprises means 6 for producing a negative pressure and e.g. a coarse filter 4 and possible other components, such as a separating container for the separation of solid particles. According to this embodiment of the invention, the suction line is provided with a shut-off valve 5 preferably operable via the control system of the treatment machine, and a vent duct 8 arranged in connection with it. In Fig. 1, reference number 7 indicates a cleansing agent supply vessel, container or equivalent. In Fig. 1, the shut-off valve 5 is shown as being located relatively close to the first end 21 of the suction hose 2, but according to the invention it can also be disposed at a considerably greater distance downstream and for example so as to allow other components arranged in the line 1 to be placed between the shut-off valve 5 and the connection point of the first end 21 of the suction hose 2.

In the arrangement according to Fig. 1, the filling of the suction line 1 up to the valve 5 can be implemented gravitationally from the aforesaid second end 22 of the suction hose 2 when the second end of the suction hose has been arranged to be located at a level higher relative to the gravity field than at least any other point of the suction line 1 that is intended to be covered by the cleansing treatment according to the invention. If the line 1 in this part intended to be covered by the treatment has one or more portions oriented in a rising direction relative to the gravity field and turning to a falling direction before the extreme end of the part to be covered by the cleansing treatment, then at the highest point of such a rising portion a vent duct or a construction having a corresponding functionality is arranged according to the invention to enable the exit or exhaust of air from that part of the suction line. The suction line 1 can also be implemented e.g. by providing a branch line (not shown in Fig. 1) downstream relative to the shut-off valve 5 and communicating with the ambient pressure, so that, suitably implemented in a manner obvious to a skilled person, it can be arranged to be filled gravitationally also without a vent duct 8 provided in connection with the shut-off valve 5 forming the extreme end of the section to be treated.

Fig. 2 represents an embodiment of the invention which consists of a suction line 1 similar to the line according to Fig. 1, but in which a separate cleansing agent filling line 11 is arranged to connect to the suction line 1. The filling line 11 is provided with a valve 5', which can be used to interrupt the flow connection between the filling line 11 and the suction line 1. The filling line 11 connects to the suction line 1 at a point upstream of the extreme end of that part of it which is to be filled with cleansing agent, in the case according to Fig. 2 upstream of the shut-off valve 5. In the solution according to Fig. 2, the suction hose 2 is arranged to be connected to the cleansing agent supply vessel 7, at a level higher relative to the gravity field than the highest point of that portion of the suction line 1 which is desired to be covered by the treatment.

In the arrangement according to Fig. 2, said desired portion of the suction line 1 can be filled by closing the shut-off valve 5, opening the valve 5' of the filling line 11 and supplying cleansing agent into the filling line 11 until the suction line 1 has been filled all the way from the shut-off valve 5 forming the first extreme end of the treatment section to the second end 22 of the suction hose 2 positioned in connection with the supply vessel 7 and forming the second extreme end of the treatment section. By keeping the liquid surface in the supply vessel 7 continuously at a level above the second end 22 of the suction hose 2 positioned in connection with the supply vessel 7, the filled state of the line can be detected from the liquid surface in the supply vessel 7 stopping falling.

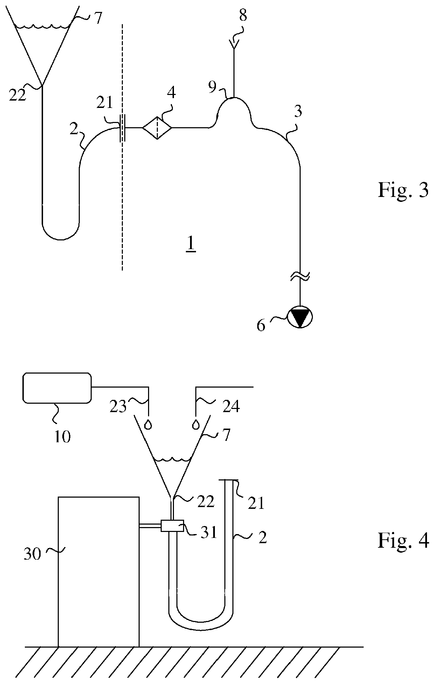

Fig. 3 represents an embodiment of the invention which consists of a suction line 1 that is otherwise identical with the line according to Fig. 1 except that the extreme end of the desired treatment section is arranged to be formed in connection with the highest point 9 of the line relative to the gravity field.

In the embodiment according to Fig. 3, if the negative pressure line is to be filled gravitationally as in the previous examples, the second end 22 of the suction hose 2, i.e. the point of supply of cleansing agent, is arranged to be at a level above the highest point 9 of the line, in the line 1 downstream of the first end of the suction hose 2. The supply of cleansing agent can be arranged to take place e.g. by holding the suction hose 2 in its normal holder both during the filling process and during the effective period of the cleansing agent, provided that the height position of this holder is at an appropriate level considering the aforesaid highest point 9 of the suction line. The height position of the holder may also be arranged to be adjusted to a suitable level with respect to this function.

This embodiment of the invention, as well as its other embodiments, can naturally also be implemented in a manner obvious to a skilled person by using a suitable pumping arrangement. On the other hand, the desired portion of the suction line as delimited according to this embodiment, too, can be arranged to be filled basically on the same principle that was described in connection with Fig. 2, yet by taking into account that it is not possible to arrange for the filling of the desired line portion with cleansing agent to be detected in the same way, because if the second end 22 of the suction hose 2 in an embodiment like this is held at a level above the aforesaid highest point 9 of the line portion 3, then the cleansing agent will flow past this highest point 9 without ever reaching the second end 22 of the suction hose 2.

The extreme end of the line portion covered by the cleansing agent left standing in the line which is located downstream of the suction hose can thus be realized according to the invention by using e.g. a shut-off valve or a suitably implemented maximum point of the line arranged in relation to the gravity field. It is also possible to provide more than one point in the line up to which it can be filled, to enable cleansing operations to be carried out with different coverages.

According to a preferred embodiment of the invention, a separate suction hose holder 31 placed at a suitable height is provided for the suction hose 2 (or suction hoses) in connection with a work post arranged in a dental treatment space, especially in connection with a dental care unit or assistant's unit 30 comprised in a dental care apparatus, expressly for use according to this invention. According to a preferred embodiment of the invention, arranged in connection with such a holder is also a cleansing agent supply/mixing basin or container 7, in connection with which there are further arranged a feed connection 23 from a container of cleansing agent concentrate 10 and a water supply connection 24 (Fig. 4). In such an arrangement, a desired mixing proportion of cleansing agent and water can be contrived to be achieved by arranging for the ratio of their rates of supply into the mixing space to correspond to the desired cleansing agent concentration.

The solution of the invention, e.g. its embodiment according to Fig. 4, can be arranged to be operated automatically or semi-automatically via the control system of the dental care apparatus. The control system may comprise a control routine for the cleansing of the suction line, which control routine may comprise various functions and commands, such as identification of a command for the cleansing of the suction line issued separately by the user or caused by the suction hose being fastened to its dedicated cleansing holder, turning off of the means for producing a negative pressure and/or prevention of their operation, opening and closing of the valves required for a transition to cleansing mode so as to open and close desired flow passages, supply of water and/or cleansing agent into the suction line, identification of a preset quantity or time, and/or based on an identification signal obtained upon a desired line portion being filled with cleansing agent, and identification of e.g. the desired portion of the negative pressure line being filled with cleansing agent.

The suction line 1 can be implemented in such a way that, after the cleansing treatment has been finished, it can be emptied simply by applying the suction produced by the negative pressure source used in the negative pressure system. In this connection it is not even critical if the system is unable to produce a sufficient suction to completely empty e.g. the bend of the suction hose typically held in a hanging position in connection with a dental care apparatus - if the hose bend is in any case prone to retain liquids sucked from the patient's mouth, it is actually better in respect of hygiene that they should remain there mixed with the disinfectant than as such. On the other hand, if the system has been arranged to be capable of emptying the rest of the line by suction, then it is certainly also capable of emptying the suction hose, by raising the hose for a moment to a level above its point of connection to the suction line. Naturally it is also possible to provide in connection with the suction line a separate suction pump designed expressly for emptying it, and/or a branch line arranged with a view to emptying expressly the line portion covered by the cleansing treatment.

An essential point about all embodiments of the invention is that the negative pressure line is so implemented that it can withstand even the hydrostatic pressure of the liquid left standing in the line without leaking. In its preferred embodiment, the invention comprises, in addition to means for preventing the flow of cleansing agent past a desired point in the negative pressure line and/or means for ensuring that the line is filled up to a desired point, means for guaranteeing the exit of air from the desired line portion, a suction hose holder arranged to be applicable in the apparatus for a cleansing function and means arranged substantially in connection with it for supplying a cleansing agent into the suction line.

In the above, a few embodiments of the invention have been described, but naturally the invention may also be implemented in other embodiments obvious to a person skilled in the art within the scope defined in the attached claims.

## Claims

1. A method for cleansing a suction line of a dental care apparatus, said suction line (1) comprising means for producing a negative pressure and at least one suction hose (2), which is arranged to be attached or attachable by its first end (21) to at least one suction line connection of a dental care unit and by its second (22) end to at least one hose holder (31) provided in the dental care apparatus, or for cleansing a suction line (1) implemented separately from the dental care apparatus and arranged to be used in connection with the dental care apparatus, said suction line (1) comprising means for producing a negative pressure and at least one suction hose (2), which is arranged to be attached or attachable by its first end (21) to at least one suction line connection separate from the dental care apparatus, and by its second end (22) to at least one hose holder (31) in a device or stand used in connection with the dental care unit, wherein a cleansing agent is supplied into the suction line (1) so that at least a given desired part of the suction line (1) downstream of said suction line connection is filled with the cleansing agent, said desired part comprising a first extreme end and a second extreme end wherein said first extreme end defines location of a desired point in the suction line (1) up to which the suction line (1) is to be filled, whereby arranged in the suction line (1) is
a valve (5) to prevent flow of the cleansing agent past the desired point in the suction line (1) and/or
a means for enabling filling of the suction line (1) with
the cleansing agent up to said desired point,
and the cleansing agent is left standing in the aforesaid at least desired part of the suction line (1) for a desired period of time.

2. The method according to claim 1, **characterized in that** said second extreme end of the desired part is i) said second end (22) of the suction hose (2) or ii) said second (22) end of the suction hose (2) including devices for use in dental care work arranged in connection with said second end (22) of the suction hose (2), and the cleansing agent is supplied into said desired part of the suction line (1) substantially from said second end (22) of the suction hose (2), from said devices for use in dental care work arranged in connection with said second end (22) of the suction hose (2) or via a point located at a distance from the extreme ends of said desired part of the suction line (1).

3. The method according to claim 1 or 2, **characterized in that** the aforesaid first extreme end of said desired part of the suction line (1) consists of the valve (5) provided in the suction line (1) and cleansing agent is fed into the suction line (1) after said valve (5) forming the first end of the desired part of the suction line (1) has been closed, or **in that** the aforesaid first extreme end of the desired part of the suction line (1) is formed by providing the suction line (1) with at least one point located downstream of the point of connection of the first end of the suction hose (2) to the suction line (1) and, relative to the gravity field at a level above said point of connection of the first end of the suction hose (2), and wherein the suction line (1) is filled substantially from the aforesaid second end of the suction hose (2) in such manner that, during the filling action and as long as the cleansing liquid is to be allowed to act on the aforesaid desired part of the suction line (1), the aforesaid second end of the suction hose (2) is held at a level relative to the gravity field that is higher than the aforesaid point forming the first extreme end of the desired part of the suction line (1).

4. The method according to any one of claims 1 - 3, **characterized in that**, while the suction line (1) is being filled with cleansing agent, air is removed from the suction line (1) via a vent duct (8) provided in connection with the point forming the first extreme end of said desired part of the line (1) and/or via a point of transition of the suction line (1) from a portion ascending relative to the gravity field into a portion descending relative to the gravity field.

5. An arrangement in connection with a dental care apparatus, said arrangement comprising a dental care apparatus and a negative pressure system comprised in the dental care apparatus or implemented physically separately from the dental care apparatus and arranged to be used in connection with the dental care apparatus, said negative pressure system comprising means for producing a negative pressure and a suction line (1), which suction line (1) comprises at least one suction hose (2) attached or attachable by its first end (21) to a negative pressure system connection of the dental care apparatus or to a negative pressure system connection separate from the dental care apparatus, and by its second (22) end to at least one hose holder (31) provided in the dental care apparatus or in a device or stand used in connection with the dental care apparatus, wherein said suction line (1) is provided with a section to be filled with cleansing agent, said section comprising a first extreme end and a second extreme end and wherein said first extreme end defines location of a desired point in the suction line (1) up to which the suction line (1) is to be filled and comprises i) a valve (5) for enabling the cleansing agent to be stopped from flowing past the desired point in the suction line (1) and/or ii) a means for enabling the suction line (1) to be filled with the cleansing agent up to the desired point, said desired point locating in the suction line (1) downstream of said connection of said first end (21) of the suction hose (2) to said negative pressure system connection.

6. The arrangement according to claim 5, **characterized in that** the arrangement comprises
i) substantially in connection with the aforesaid desired point of the suction line (1) and/or
ii) upstream of said desired point, in connection with a point of transition of the suction line (1) from an ascending line portion relative to the gravity field into a descending line portion,
at least one vent duct (8) or a construction having a corresponding functionality arranged in the suction line (1) to allow exit or removal of air from the suction line (1).

7. The arrangement according to claim 6, **characterized in that** the aforesaid point of transition of the suction line (1) from an ascending line portion relative to the gravity field into a descending line portion is located, in the direction of action of gravity, at a higher level than the aforesaid negative pressure system connection for the first end (21) of the suction hose (2) and at a higher level than any other point in the suction line (1) upstream of said point of transition.

8. The arrangement according to any one of claims 5 - 7, **characterized in that** the arrangement comprises two or more desired points arranged in the suction line (1).

9. The arrangement according to any one of claims 5 - 8, **characterized in that** the dental care apparatus or the device or the stand used in connection with the dental care apparatus is provided with at least one suction hose holder (31) or a holder having a corresponding functionality, said holder (31) being configured to enable the suction hose (2) or a device for use in dental care work attached to the suction hose (2) to be placed at substantially the same or a higher level in the gravity field than the aforesaid desired point in the suction line (1), and/or to be placed at substantially the same or a higher level in the gravity field than any point in the suction line (1) upstream of said desired point of the suction line (1).

10. The arrangement according to any one of claims 5 - 9, **characterized in that** the arrangement comprises a hose holder (31), which is arranged to be used in connection with a cleansing operation of the suction line (1) and, arranged in functional connection with the aforesaid hose holder (31), a manually operated or a semiautomatic or an automatic means for conveying the cleansing agent into the suction line (1).

11. A dental care apparatus, comprising
- either a dental care unit or both a dental care unit and an assistant's unit (30) arranged in connection with the dental care unit,
- a negative pressure system comprising at least a means for producing a negative pressure and a suction line (1), said suction line (1) comprising at least one suction hose (2) attachable by its first end (21) either to the suction line (1) arranged in said dental care unit or in said assistant's unit (30) and by its second end (22) to at least one hose holder (31) arranged in the dental care apparatus or the assistant's unit (30),
wherein said suction line (1) is provided with a means for enabling a given desired part of the suction line (1) to be kept filled for a desired length of time with a cleansing agent supplied into the suction line (1), the given desired part comprising a first extreme end and a second extreme end wherein said first extreme end defines location of a desired point in the suction line (1) up to which the suction line (1) is to be filled, said means comprising a valve (5) to prevent flow of the cleansing agent past the desired point in the suction line (1) and/or a means for enabling filling of the suction line (1) with the cleansing agent up to the desired point, said desired part of the suction line (1) being arranged to comprise at least the entire suction hose (2) and a portion of the suction line (1) downstream of the connection of said first end (21) of the suction hose (2) to the dental care unit or to the assistant's unit (30).

12. The dental care apparatus according to claim 11, **characterized in that** the aforesaid dental care unit or the aforesaid assistant's unit (30) is provided with at least one suction line filling station, which comprises at least a cleansing agent supply container (7), said at least one hose holder (31) and an open or closed flow connection from said container (7) into the suction hose (2) attached to said hose holder (31), said container (7) being optionally arranged with connections for supply of water and/or cleansing agent into said container (7).

13. The dental care apparatus according to claim 12, **characterized in that** the aforesaid dental care unit comprises a control system and actuating devices operable via the control system, said actuating devices comprising at least a means for supplying water and/or cleansing agent into the aforesaid cleansing agent container (7) .

14. The dental care apparatus according to claim 13, **characterized in that** the aforesaid control system comprises a sequence of functions, including at least a portion of the following functions:
identification of a command for a suction line cleansing function issued either by the user or generated by attachment of the suction hose (2) to its dedicated cleansing holder (31), turning off of the means for producing negative pressure and/or prevention of the operation for producing negative pressure, opening and closing of valves required for a transition to cleansing mode so as to close and/or open desired flow passages, supply of water and/or cleansing agent into the suction line (1), identification of a preset quantity or time, informing based on an identification signal that the desired line portion is filled with cleansing agent, identification of the desired portion of the suction line (1) being filled with cleansing agent.

## Patentansprüche

1. Verfahren zum Reinigen einer Saugleitung einer Zahnpflegevorrichtung, wobei die Saugleitung (1) Mittel zum Erzeugen eines Unterdrucks und wenigstens einen Saugschlauch (2) aufweist, der dazu ausgelegt ist, mit seinem ersten Ende (21) an mindestens einer Saugleitungsanbindung einer Zahnpflegeeinheit und an seinem zweiten Ende (22) an mindestens einem in der Zahnpflegevorrichtung vorgesehenen Schlauchhalter (31) angebracht oder anbringbar zu sein,
oder zum Reinigen einer Saugleitung (1), welche separat von der Zahnpflegevorrichtung ausgebildet ist und dazu ausgelegt ist, in Verbindung mit der Zahnpflegevorrichtung verwendet zu werden, wobei die Saugleitung (1) Mittel zum Erzeugen eines Unterdrucks und wenigstens einen Saugschlauch (2) aufweist, der dazu ausgelegt ist, mit seinem ersten Ende (21) an mindestens einer von dem Zahnpflegevorrichtung separaten Saugleitungsanbindung und mit seinem zweiten Ende (22) an mindestens einem Schlauchhalter (31) in einer / einem in Verbindung mit dem Zahnpflegevorrichtung verwendeten Vorrichtung oder Gestell angebracht oder anbringbar zu sein,
wobei
der Saugleitung (1) ein Reinigungsmittel so zugeführt wird, dass zumindest ein vorgegebener erwünschter Abschnitt der Saugleitung (1) stromabwärts der Saugleitungsanbindung mit dem Reinigungsmittel gefüllt wird, wobei der erwünschte Abschnitt ein erstes äußerstes Ende und ein zweites äußerstes Ende aufweist, wobei das erste äußerste Ende die Position eines erwünschten Punkts in der Saugleitung (1) definiert, bis zu dem die Saugleitung (1) gefüllt werden soll, wobei in der Saugleitung (1) angeordnet ist
ein Ventil (5), das einen Fluss des Reinigungsmittels über den erwünschten Punkt hinaus in der Saugleitung (1) verhindert, und / oder
ein Mittel, welches es ermöglicht, die Saugleitung (1) mit dem Reinigungsmittel bis zu dem erwünschten Punkt zu füllen,
und das Reinigungsmittel zumindest in dem erwünschten Abschnitt der Saugleitung (1) für einen erwünschten Zeitraum stehen gelassen wird.

2. Verfahren nach Anspruch 1, **dadurch gekennzeichnet, dass**
das zweite äußerste Ende des erwünschten Abschnitts i) das zweite Ende (22) des Saugschlauchs (2) oder ii) das zweite Ende (22) des Saugschlauchs (2) ist, welches Vorrichtungen zur Verwendung bei der Zahnpflege umfasst, welche in Verbindung mit dem zweiten Ende (22) der Saugleitung (2) angeordnet sind, und
das Reinigungsmittel dem erwünschten Abschnitt der Saugleitung (1) im Wesentlichen von dem zweiten Ende (22) des Saugschlauchs (2), von den Vorrichtungen zur Verwendung bei der Zahnpflege, welche in Verbindung mit dem zweiten Ende (22) des Saugschlauchs (2) angeordnet sind, oder über einen Punkt, der in einem Abstand von den äußersten Enden des erwünschten Abschnitts der Saugleitung (1) angeordnet ist, zugeführt wird.

3. Verfahren nach einem der Ansprüche 1 oder 2, **dadurch gekennzeichnet, dass**
das zweite äußerste Ende des erwünschten Abschnitts der Saugleitung (1) aus dem Ventil (5) besteht, das in der Saugleitung (1) vorgesehen ist, und Reinigungsmittel der Saugleitung (1) zugeführt wird, nachdem das Ventil (5), das das erste Ende des erwünschten Abschnitts der Saugleitung (1) bildet, geschlossen wurde, oder, dass das erste äußerste Endes des erwünschten Abschnitts der Saugleitung (1), durch das Ausstatten der Saugleitung (1) mit mindestens einem Punkt ausgebildet wird, der stromabwärts von dem Anbindungspunkt des ersten Endes des Saugschlauchs (2) mit der Saugleitung (1) angeordnet ist und relativ zu dem Schwerkraftfeld auf einer Höhe über dem Anbindungspunkt des ersten Endes des Saugschlauchs (2) liegt, und, wobei die Saugleitung (1) im Wesentlichen von dem zweiten Ende des Saugschlauchs (2) derart befüllt wird, dass während des Füllvorgangs und solange die Reinigungsflüssigkeit auf den erwünschten Abschnitt der Saugleitung (1) einwirken darf, das zweite Ende des Saugschlauches (2) auf einem relativ zum Schwerkraftfeld höheren Niveau als der Punkt, der das erste äußerste Ende des erwünschten Abschnitts der Saugleitung (1) bildet, gehalten wird.

4. Verfahren nach einem der Ansprüche 1 bis 3, **dadurch gekennzeichnet, dass**, wenn die Saugleitung (1) mit einem Reinigungsmittel befüllt wird, Luft aus der Saugleitung (1) entfernt wird über einen Luftauslasskanal (8), der in Verbindung mit dem Punkt vorgesehen ist, der das erste äußerste Ende des erwünschten Abschnitts der Saugleitung (1) bildet, und / oder über einen Übergangspunkt der Saugleitung (1) von einem relativ zum Schwerkraftfeld ansteigenden Abschnitt zu einem relativ zum Schwerkraftfeld abfallenden Abschnitt.

5. Anordnung in Verbindung mit einer Zahnpflegevorrichtung, wobei die Anordnung eine Zahnpflegevorrichtung und ein Unterdrucksystem umfasst, das in der Vorrichtung enthalten ist oder physisch getrennt von der Zahnpflegevorrichtung ausgebildet und dazu ausgelegt ist, um in Verbindung mit der Zahnpflegevorrichtung verwendet zu werden, wobei das Unterdrucksystem ein Mittel zum Erzeugen von Unterdruck und eine Saugleitung (1) umfasst, wobei die Saugleitung (1) mindestens einen Saugschlauch (2) umfasst, der mit seinem ersten Ende (21) an einer Unterdrucksystemanbindung der Zahnpflegevorrichtung oder an einer von der Zahnpflegevorrichtung separaten Unterdrucksystemanbindung und an seinem zweiten Ende (22) an mindestens einem Schlauchhalter (31), welcher in der Zahnpflegevorrichtung oder in einer / einem in Verbindung mit der Zahnpflegevorrichtung verwendeten Vorrichtung oder Ständer vorgesehen ist, angebracht oder anbringbar ist,
wobei
die Saugleitung (1) einen Abschnitt aufweist, welcher mit Reinigungsmittel befüllt werden soll, wobei der erwünschte Abschnitt ein erstes äußerstes Ende und ein zweites äußerstes Ende aufweist, wobei das erste äußerste Ende die Position eines erwünschten Punkts in der Saugleitung (1) definiert, bis zu dem die Saugleitung (1) befüllt werden soll, und aufweist
i) ein Ventil (5), das einen Fluss des Reinigungsmittels über den erwünschten Punkt hinaus in der Saugleitung (1) verhindert, und / oder
ii) ein Mittel, welches es ermöglicht, die Saugleitung (1) mit dem Reinigungsmittel bis zu dem erwünschten Punkt zu befüllen, wobei
der erwünschte Punkt in der Saugleitung (1) stromabwärts von der Verbindung des ersten Endes (21) des Saugschlauchs (2) mit der Unterdrucksystemanbindung angeordnet ist.

6. Anordnung nach Anspruch 5, **dadurch gekennzeichnet, dass** die Anordnung aufweist
i) im Wesentlichen in Verbindung mit dem erwünschten Punkt der Saugleitung (1) und /oder
ii) stromaufwärts des erwünschten Punktes in Verbindung mit einem Übergangspunkt der Saugleitung (1) von einem relativ zu dem Schwerkraftfeld ansteigenden Leitungsabschnitt zu einem abfallenden Leitungsabschnitt,
mindestens einen Entlüftungskanal (8) oder eine Konstruktion, die eine entsprechende Funktionalität aufweist, der / die in der Saugleitung (1) angeordnet ist, um ein Ausströmen oder ein Entfernen von Luft aus der Saugleitung (1) zu ermöglichen.

7. Anordnung nach Anspruch 6, **dadurch gekennzeichnet, dass** der Übergangspunkt der Saugleitung (1) von einem relativ zu dem Schwerkraftfeld ansteigenden Leitungsabschnitt in einen abfallenden Leitungsabschnitt in der Richtung der Wirkung der Schwerkraft auf einem höheren Niveau als die Unterdrucksystemanbindung für das erste Ende (21) des Saugschlauchs (2) mit der Saugleitung und auf einem höheren Niveau als jeder andere Punkt in der Saugleitung (1) stromaufwärts von dem Übergangspunkt angeordnet ist.

8. Anordnung nach einem der Ansprüche 5 bis 7, **dadurch gekennzeichnet, dass** die Anordnung zwei oder mehr erwünschte Punkte aufweist, die in der Saugleitung (1) angeordnet sind.

9. Anordnung nach einem der Ansprüche 5 bis 8, **dadurch gekennzeichnet, dass** die Zahnpflegevorrichtung oder die / der in Verbindung mit der Zahnpflegevorrichtung verwendete Vorrichtung oder Ständer mit mindestens einem Saugschlauchhalter (31) oder einem Halter (31) mit einer entsprechenden Funktionalität versehen ist, wobei der Halter (31) dazu ausgelegt ist, es zu ermöglichen, dass der Saugschlauch (2) oder eine an dem Saugschlauch (2) angebrachte Vorrichtung zur Verwendung bei Zahnpflegearbeiten, auf im Wesentlichen dem gleichen oder einem höheren Niveau in dem Schwerkraftfeld angeordnet wird als der vorstehend erwähnte erwünschte Punkt in der Saugleitung (1) und / oder auf im Wesentlichen dem gleichen oder einem höheren Niveau in dem Schwerkraftfeld als irgendein Punkt in der Saugleitung (1) stromaufwärts des erwünschten Punktes der Saugleitung (1) angeordnet wird.

10. Anordnung nach einem der Ansprüche 5 bis 9, **dadurch gekennzeichnet, dass** die Anordnung einen Schlauchhalter (31), der dazu ausgelegt ist, in Verbindung mit einem Reinigungsvorgang der Saugleitung (1) verwendet zu werden, und ein in funktioneller Verbindung mit dem Schlauchhalter (31) angeordnetes manuell betätigbares Mittel oder ein halbautomatisches oder automatisches Mittel zum Einspeisen eines Reinigungsmittels in die Saugleitung (1) umfasst.

11. Zahnpflegevorrichtung, umfassend
- entweder eine Zahnpflegeeinheit oder sowohl eine Zahnpflegeeinheit als auch eine in Verbindung mit der Zahnpflegeeinheit angeordnete Assistenzeinheit (30),
- ein Unterdrucksystem, welches mindestens ein Mittel zum Erzeugen eines Unterdrucks und eine Saugleitung (1) aufweist, wobei die Saugleitung (1) mindestens einen Saugschlauch (2) aufweist, der mit seinem ersten Ende (21) entweder an der Saugleitung (1), welche in der Zahnpflegeeinheit oder der Assistenzeinheit (30) angeordnet ist, und mit seinem zweiten Ende (22) an mindestens einem Schlauchhalter (31), welcher in der Zahnpflegevorrichtung oder der Assistenzeinheit (30) angeordnet ist, anbringbar ist,
wobei
die Saugleitung (1) mit einem Mittel versehen ist, das es ermöglicht, einen vorgegebenen erwünschten Abschnitt der Saugleitung (1) für eine erwünschte Zeitdauer mit einem der Saugleitung (1) zugeführten Reinigungsmittel befüllt zu halten, wobei der vorgegebene erwünschte Abschnitt ein erstes äußerstes Ende und ein zweites äußerstes Ende aufweist, wobei das erste äußerste Ende eine Position eines erwünschten Punktes in der Saugleitung (1) definiert, bis zu dem die Saugleitung (1) befüllt werden soll, das Mittel ein Ventil (5), um einen Fluss des Reinigungsmittels über den erwünschten Punkt der Saugleitung (1) hinaus zu verhindern, und /oder ein Mittel zum Ermöglichen des Füllens der Saugleitung (1) mit Reinigungsmittel bis zu dem erwünschten Punkt aufweist, wobei der erwünschte Abschnitt der Saugleitung (1) so angeordnet ist, dass er mindestens den gesamten Saugschlauch (2) und einen Abschnitt der Saugleitung (1) stromabwärts von der Verbindung des ersten Endes (21) des Saugschlauchs (2) mit der Zahnpflegeeinheit oder der Assistenzeinheit (30) umfasst.

12. Zahnpflegevorrichtung nach Anspruch 11, **dadurch gekennzeichnet, dass** die Zahnpflegeeinheit oder die Assistenzeinheit (30) mit mindestens einer Saugleitungsfüllstation versehen ist, die mindestens einen Reinigungsmittelvorratsbehälter (7) und zumindest den Schlauchhalter (31) und eine offene oder geschlossene Fließverbindung von dem Behälter (7) in den an dem Schlauchhalter (31) befestigten Saugschlauch (2) aufweist, wobei der Behälter (7) optional mit Anschlüssen zur Zufuhr von Wasser und /oder Reinigungsmittel in den Behälter (7) ausgestattet ist.

13. Zahnpflegevorrichtung gemäß Anspruch 12, **dadurch gekennzeichnet, dass** die Zahnpflegevorrichtung ein Steuersystem und über das Steuersystem betätigbare Betätigungsvorrichtungen umfasst, wobei die Betätigungsvorrichtungen mindestens ein Mittel zum Zuführen von Wasser und / oder Reinigungsmittel in den vorstehend genannten Reinigungsmittelbehälter (7) umfassen.

14. Zahnpflegevorrichtung nach Anspruch 13, **dadurch gekennzeichnet, dass** das vorgenannte Steuersystem eine Folge von Funktionen umfasst, die wenigstens einen Teil der folgenden Funktionen umfasst:
Identifizierung eines Befehls für eine Saugleitungsreinigungsfunktion, der entweder von dem Benutzer erlassen wurde oder durch Anbringen des Saugschlauchs (2) an seinem zugehörigen Reinigungshalter (31) erzeugt wurde,
Ausschalten der Mittel zum Erzeugen eines Unterdrucks und / oder Verhindern des Betriebs zur Erzeugung von Unterdruck,
Öffnen und Schließen von Ventilen, die für einen Übergang in den Reinigungsmodus erforderlich sind, um so erwünschte Strömungskanäle zu schließen und / oder zu öffnen,
Zufuhr von Wasser und / oder Reinigungsmittel in die Saugleitung (1), Identifizierung einer voreingestellten Menge oder Zeit,
Informieren auf der Grundlage eines Identifizierungssignals, dass der erwünschte Leitungsabschnitt mit Reinigungsmittel befüllt ist, und
Identifizierung des erwünschten Abschnitts der Saugleitung (1), der mit Reinigungsmittel befüllt wird.

## Revendications

1. Procédé de nettoyage d'une ligne d'aspiration d'un appareil de soin dentaire, ladite ligne d'aspiration (1) comprenant un moyen de production d'une pression négative et au moins un flexible d'aspiration (2), qui est disposé pour être attaché ou attachable par sa première terminaison (21) à au moins une connexion de ligne d'aspiration d'une unité de soin dentaire et par sa seconde terminaison (22) à au moins un support de flexible (31) fourni dans l'appareil de soin dentaire, ou pour nettoyer une ligne d'aspiration (1) établie séparément de l'appareil de soin dentaire et disposée pour être utilisée en connexion avec l'appareil de soin dentaire, ladite ligne d'aspiration (1) comprenant un moyen pour produire une pression négative et au moins un flexible d'aspiration (2), qui est disposé pour être attaché ou attachable par sa première terminaison (21) à au moins une connexion de ligne d'aspiration séparée de l'appareil de soin dentaire, et par sa seconde terminaison (22) à au moins un support de flexible (31) dans un dispositif ou socle utilisé en connexion avec l'unité de soin dentaire,
dans lequel un agent nettoyant est introduit dans la ligne d'aspiration (1) de sorte qu'au moins une partie souhaitée donnée de la ligne d'aspiration (1) en aval de ladite connexion de ligne d'aspiration est remplie avec l'agent nettoyant, ladite partie souhaitée comprenant une première terminaison extrême et une seconde terminaison extrême où ladite première terminaison extrême définit l'endroit d'un point souhaité dans la ligne d'aspiration (1) jusqu'auquel la ligne d'aspiration (1) doit être remplie, où il est disposé dans la ligne d'aspiration (1)
une vanne (5) pour éviter l'écoulement de l'agent nettoyant après le point souhaité dans la ligne d'aspiration (1) et/ou
un moyen pour permettre le remplissage de la ligne d'aspiration (1) avec l'agent nettoyant jusqu'audit point souhaité,
et l'agent nettoyant repose dans la au moins une partie souhaitée précitée de la ligne d'aspiration (1) sur une période de temps souhaitée.

2. Procédé selon la revendication 1, **caractérisé en ce que** ladite seconde terminaison extrême de la partie souhaitée est i) ladite seconde terminaison (22) du flexible d'aspiration (2) ou ii) ladite seconde terminaison (22) du flexible d'aspiration (2) comprenant des dispositifs pour une utilisation dans un travail de soin dentaire disposés en connexion avec ladite seconde terminaison (22) du flexible d'aspiration (2), et l'agent nettoyant est introduit dans ladite partie souhaitée de la ligne d'aspiration (1) pratiquement à partir de ladite seconde terminaison (22) du flexible d'aspiration (2), à partir desdits dispositifs pour une utilisation dans un travail de soin dentaire disposés en connexion avec ladite seconde terminaison (22) du flexible d'aspiration (2) ou via un point disposé à une distance à partir des terminaisons extrêmes de ladite partie souhaitée de la ligne d'aspiration (1).

3. Procédé selon la revendication 1 ou 2, **caractérisé en ce que** la première terminaison extrême précitée de ladite partie souhaitée de la ligne d'aspiration (1) consiste en la vanne (5) fournie dans la ligne d'aspiration (1) et un agent nettoyant est introduit dans la ligne d'aspiration (1) après que ladite vanne (5) formant la première terminaison de la partie souhaitée de la ligne d'aspiration (1) a été fermée, ou **en ce que** la première terminaison extrême précitée de la partie souhaitée de la ligne d'aspiration (1) est formée en munissant la ligne d'aspiration (1) d'au moins un point disposé en aval du point de connexion de la première terminaison du flexible d'aspiration (2) par rapport à la ligne d'aspiration (1) et, par rapport au champ de gravité à un niveau supérieur audit point de connexion de la première terminaison du flexible d'aspiration (2), et où la ligne d'aspiration (1) est remplie pratiquement à partir de la seconde terminaison précitée du flexible d'aspiration (2) de telle sorte que, pendant l'action de remplissage et aussi longtemps que le liquide nettoyant est laissé à agir sur la partie souhaitée précitée de la ligne d'aspiration (1), la seconde terminaison précitée du flexible d'aspiration (2) est maintenue à un niveau par rapport au champ de gravité qui est supérieur au point précité formant la première terminaison extrême de la partie souhaitée de la ligne d'aspiration (1).

4. Procédé selon l'une quelconque des revendications 1-3, **caractérisé en ce que**, alors que la ligne d'aspiration (1) est remplie avec un agent nettoyant, de l'air est éliminé de la ligne d'aspiration (1) via une canalisation d'évacuation (8) fournie en connexion avec le point formant la première terminaison extrême de ladite partie souhaitée de la ligne (1) et/ou via un point de transition de la ligne d'aspiration (1) à partir d'une portion ascendante par rapport au champ de gravité dans une portion descendante par rapport au champ de gravité.

5. Dispositif en connexion avec un appareil de soin dentaire, ledit dispositif comprenant un appareil de soin dentaire et un système de pression négative compris dans l'appareil de soin dentaire ou établi physiquement séparément de l'appareil de soin dentaire et disposé pour être utilisé en connexion avec l'appareil de soin dentaire, ledit système de pression négative comprenant un moyen pour produire une pression négative et une ligne d'aspiration (1), laquelle ligne d'aspiration (1) comprend au moins un flexible d'aspiration (2) attaché ou attachable par sa première terminaison (21) à une connexion de système de pression négative de l'appareil de soin dentaire ou à une connexion de système de pression négative séparée de l'appareil de soin dentaire, et par sa seconde terminaison (22) à au moins un support de flexible (31) fourni dans l'appareil de soin dentaire ou dans un dispositif ou socle utilisé en connexion avec l'appareil de soin dentaire, dans lequel ladite ligne d'aspiration (1) est munie d'une section à remplir avec un agent nettoyant, ladite section comprenant une première terminaison extrême et une seconde terminaison extrême et dans lequel ladite première terminaison extrême définit un endroit d'un point souhaité dans la ligne d'aspiration (1) jusqu'auquel la ligne d'aspiration (1) doit être remplie et comprend i) une vanne (5) pour permettre d'arrêter l'écoulement de l'agent nettoyant après le point souhaité dans la ligne d'aspiration (1) et/ou ii) un moyen pour permettre à la ligne d'aspiration (1) d'être remplie avec l'agent nettoyant jusqu'au point souhaité, ledit point souhaité étant disposé dans la ligne d'aspiration (1) en aval de ladite connexion de ladite première terminaison (21) du flexible d'aspiration (2) jusqu'à ladite connexion de système de pression négative.

6. Dispositif selon la revendication 5, **caractérisé en ce que** le dispositif comprend
i) pratiquement en connexion avec le point souhaité précité de la ligne d'aspiration (1) et/ou
ii) en amont dudit point souhaité, en connexion avec un point de transition de la ligne d'aspiration (1) à partir d'une portion de ligne ascendante par rapport au champ de gravité dans une portion de ligne descendante,
au moins une canalisation d'évacuation (8) ou une construction ayant une fonctionnalité correspondante disposée dans la ligne d'aspiration (1) pour permettre la sortie ou l'élimination d'air de la ligne d'aspiration (1).

7. Dispositif selon la revendication 6, **caractérisé en ce que** le point de transition précité de la ligne d'aspiration (1) à partir d'une portion de ligne ascendante par rapport au champ de gravité dans une portion de ligne descendante est disposé, dans la direction d'action de gravité, à un niveau plus élevé que la connexion de système de pression négative précitée pour la première terminaison (21) du flexible d'aspiration (2) et à un niveau plus élevé que tout autre point dans la ligne d'aspiration (1) en amont dudit point de transition.

8. Dispositif selon l'une quelconque des revendications 5-7, **caractérisé en ce que** le dispositif comprend deux ou plusieurs points souhaités disposés dans la ligne d'aspiration (1).

9. Dispositif selon l'une quelconque des revendications 5-8, **caractérisé en ce que** l'appareil de soin dentaire ou le dispositif ou le socle utilisé en connexion avec l'appareil de soin dentaire est muni d'au moins un support de flexible d'aspiration (31) ou d'un support ayant une fonctionnalité correspondante, ledit support (31) étant configuré pour permettre au flexible d'aspiration (2) ou à un dispositif pour une utilisation dans un travail de soin dentaire attaché au flexible d'aspiration (2) d'être placé pratiquement au même niveau ou à un niveau plus élevé dans le champ de gravitation que le point souhaité précité dans la ligne d'aspiration (1), et/ou d'être placé pratiquement au même niveau ou à un niveau plus élevé dans le champ de gravité que tout point dans la ligne d'aspiration (1) en amont dudit point souhaité de la ligne d'aspiration (1).

10. Dispositif selon l'une quelconque des revendications 5-9, **caractérisé en ce que** le dispositif comprend un support de flexible (31), qui est disposé pour être utilisé en connexion avec une opération de nettoyage de la ligne d'aspiration (1) et, disposé dans une connexion fonctionnelle avec le support de flexible précité (31), un moyen mis en fonctionnement manuellement ou semi-automatique ou automatique pour acheminer l'agent nettoyant dans la ligne d'aspiration (1).

11. Appareil de soin dentaire, comprenant
- soit une unité de soin dentaire, soit les deux d'une unité de soin dentaire et d'une unité d'assistant (30) disposée en connexion avec l'unité de soin dentaire,
- un système de pression négative comprenant au moins un moyen pour produire une pression négative et une ligne d'aspiration (1), ladite ligne d'aspiration (1) comprenant au moins un flexible d'aspiration (2) attachable par sa première terminaison (21) soit à la ligne d'aspiration (1) disposée dans ladite unité de soin dentaire, soit dans ladite unité d'assistant (30) et par sa seconde terminaison (22) à au moins un support de flexible (31) disposé dans l'appareil de soin dentaire ou l'unité d'assistant (30),
dans lequel ladite ligne d'aspiration (1) est munie d'un moyen pour permettre qu'une partie souhaitée donnée de la ligne d'aspiration (1) soit maintenue remplie sur une durée souhaitée avec un agent nettoyant introduit dans la ligne d'aspiration (1), la partie souhaitée donnée comprenant une première terminaison extrême et une seconde terminaison extrême, dans lequel ladite première terminaison extrême définit un endroit d'un point souhaité dans la ligne d'aspiration (1) jusqu'auquel la ligne d'aspiration (1) doit être remplie, ledit moyen comprenant une vanne (5) pour éviter l'écoulement de l'agent nettoyant après le point souhaité dans la ligne d'aspiration (1) et/ou d'un moyen pour permettre le remplissage de la ligne d'aspiration (1) avec l'agent nettoyant jusqu'au point souhaité, ladite partie souhaitée de la ligne d'aspiration (1) étant disposée pour comprendre au moins le flexible d'aspiration (2) entier et une portion de la ligne d'aspiration (1) en aval de la connexion de ladite première terminaison (21) du flexible d'aspiration (2) jusqu'à l'unité de soin dentaire ou à l'unité d'assistant (30).

12. Appareil de soin dentaire selon la revendication 11, **caractérisé en ce que** l'unité de soin dentaire précitée ou l'unité d'assistant précité (30) est munie d'au moins une station de remplissage de ligne d'aspiration, qui comprend au moins un récipient d'alimentation en agent nettoyant (7), ledit au moins un support de flexible (31) et une connexion d'écoulement ouverte ou fermée à partir dudit récipient (7) dans le flexible d'aspiration (2) attaché audit support de flexible (31), ledit récipient (7) étant éventuellement disposé avec des connexions pour introduire de l'eau et/ou un agent nettoyant dans ledit récipient (7).

13. Appareil de soin dentaire selon la revendication 12, **caractérisé en ce que** l'unité de soin dentaire précitée comprend un système de contrôle et des dispositifs d'actionnement pouvant fonctionner via le système de contrôle, lesdits dispositifs d'actionnement comprenant au moins un moyen pour introduire de l'eau et/ou un agent nettoyant dans le récipient d'agent nettoyant précité (7).

14. Appareil de soin dentaire selon la revendication 13, **caractérisé en ce que** le système de contrôle précité comprend une succession de fonctions, incluant au moins une portion des fonctions suivantes :
identification d'une commande pour une fonction de nettoyage de ligne d'aspiration provenant soit de l'utilisateur soit généré par l'attachement du flexible d'aspiration (2) à son support de nettoyage dédié (31), arrêt du moyen de production de pression négative et/ou prévention de l'opération de production de pression négative, ouverture et fermeture de vannes nécessaires pour une transition au mode de nettoyage afin de fermer et/ou ouvrir des passages d'écoulement souhaités, introduction d'eau et/ou d'agent nettoyant dans la ligne d'aspiration (1), identification d'une quantité ou durée prédéterminée, information sur la base d'un signal d'identification que la portion de ligne souhaitée est remplie avec l'agent nettoyant, identification de la portion souhaitée de la ligne d'aspiration (1) remplie avec l'agent nettoyant.
